# NEUE EUROPÄISCHE PATENTSCHRIFT

(11) **EP 0 912 836 B2**
(45) Veröffentlichungstag und Bekanntmachung des Hinweises auf die Entscheidung über den Einspruch: **08.09.2004**
(45) Hinweis auf die Patenterteilung: 15.03.2000
(21) Anmeldenummer: 97932720.2
(22) Anmeldetag: 02.07.1997
(51) Int. Cl.: F16C 13/00

(54) **WALZE FÜR DIE DRUCKBEHANDLUNG EINER BAHN**
WEB PRESSING ROLLER
ROULEAU POUR LE TRAITEMENT PAR COMPRESSION D'UNE BANDE

(30) Priorität: 25.07.1996 DE 19629967
(43) Veröffentlichungstag der Anmeldung: 06.05.1999
(73) Patentinhaber: Eduard Küsters Maschinenfabrik GmbH & Co. KG, 47805 Krefeld (DE)
(72) Erfinder: BRENDEL, Bernhard, D-47929 Grefrath (DE); SCHRÖRS, Günter, D-47918 Tönisvorst (DE); KUBIK, Klaus, D-47918 Tönisvorst (DE)
(74) Vertreter: Kluin, Jörg-Eden, Dr. Dipl.-Phys.
(86) Internationale Anmeldenummer: PCT/DE1997/001388
(87) Internationale Veröffentlichungsnummer: WO 1998/004844

(56) Entgegenhaltungen:
- DE-A- 2 502 161
- DE-A- 2 522 657
- DE-A- 3 528 333
- DE-A- 4 012 439
- DE-A- 19 527 225
- DE-B- 2 759 035
- DE-C- 3 820 974
- DE-U- 9 205 796
- DE-U- 9 314 568

## Beschreibung

Die Erfindung bezieht sich auf eine Walze der dem Oberbegriff des Anspruchs 1 entsprechenden Art.

Durch das DE 93 14 568 U ist eine Walze bekannt, bei der die Stützelemente mit den Rändern von an ihnen selbst ausgebildeten Lagertaschen am Innenumfang der Hohlwalze anliegen. Einander in Längsrichtung der Walze benachbarte Stützelemente folgen unmittelbar aufeinander. Die Lagertaschen erstrecken sich an den einander benachbarten Seiten in Längsrichtung der Walze aufeinanderfolgender Stützelemente bis unmittelbar an den Rand des Stützelementes, so daß zwischen aufeinanderfolgenden Lagertaschen der minimal mögliche Abstand besteht. Bei der Realisierung von Walzen der dem DE-GM 9314 568 entsprechenden Art wurde jedoch festgestellt, daß die eingesetzten Hohlwalzen aus faserverstärktem Kunststoff von 15 bis 20 mm Wandstärke so verformbar sind, daß die Übergangsstellen von einem Stützelement auf das in Längsrichtung der Walze folgende Stützelement sich im Liniendruckverlauf ausprägen. Der hydraulische Druck in den Lagertaschen fällt quer zum Rand von dem in der Lagertasche herrschenden Wert auf Null ab und steigt am Rand der nächsten Lagertasche wieder von Null auf den Druck in der dortigen Lagertasche an. Dieser Druckabfall am Innenumfang der Hohlwalze macht sich wegen der Nachgiebigkeit der Hohlwalze an deren Außenumfang noch bemerkbar.

Dieses Problem ist bei dem Oberbegriff des Anspruchs 1 zugrundeliegenden DE 92 05 796 U durch eine sich längs aller Stützelemente auf diesen erstrekkende, mit Lagertaschen versehene Leiste behoben, die dem Druckabfall an den einander zugewandten Rändern der Stützelemente überbrückt.

Die Lagertaschen der Leisten werden aus den darunterliegenden Zylinderräumen der Stützelemente über Drosselbohrungen versorgt, die im ungünstigsten Fall durch in der Druckflüssigkeit mitgeführte Partikel verstopfen können. Dann bleibt in den betroffenen Lagertaschen kein Druck bestehen und kann sich kein hydraulischer Ausgleich mehr ausbilden. Die Dichtleiste wird mit der vollen Kraft der Druckflüssigkeit in der Zylinderkammer des betroffenen Stützelementes gegen den Innenumfang der Hohlwalze gepreßt. Es kommt zu starker Reibung und entsprechenden Zerstörungen.

Der Erfindung liegt die Aufgabe zugrunde, eine gattungsgemäße Walze betriebssicherer zu gestalten.

Diese Aufgabe wird durch die in Anspruch 1 wiedergegebene Erfindung gelöst.

Der Unterschied zu der bekannten Walze besteht darin, daß die Lagertaschen nicht mehr über Drosselbohrungen von dem zugehörigen Stützelement versorgt werden, sondern über drosselfreie Bohrungen, bei denen kein Verstopfungsrisiko besteht.

Um die Anpassungsfähigkeit der Dichtleiste an die von den Stützelementen ausgeübten Drücke zu erhöhen, ohne dadurch die Stabilität der Dichtleisten insgesamt und gegebenenfalls der auf ihnen ausgebildeten Lagertaschen zu gefährden, empfiehlt sich eine die Biegefähigkeit und damit die Schmiegsamkeit fördernde Querschnittsschwächung nach Anspruch 2, die in der Praxis in der in Anspruch 3 wiedergegebenen Weise durch eine Nut verwirklicht werden kann.

Bei der in erster Linie in Betracht kommenden Ausführungsform können die Stützelemente gemäß Anspruch 4 in der zu ihrer Wirkrichtung senkrechten Ebenen einen rechteckigen Grundriß aufweisen, die Lagertaschen in Umfangsrichtung schmäler als die Stützelementkörper sein und außerhalb des Grundrisses der jeweiligen Lagertasche auf dem Stützelementkörper nahe den Ecken seines rechteckigen Grundrisses vier ringsum berandete Stabilisierungstaschen vorgesehen sein, die über gedrosselte Zuleitungen mit der Zylinderkammer verbunden sind.

Die in Umfangsrichtung schmälere Ausbildung der Lagertaschen soll vermeiden, daß sich die Hohlwalze in dem in Umfangsrichtung überspannten Bereich der Lagertasche unter der Wirkung der Linienkraft eindrückt, was an den Kanten der Berandung zu erhöhten Pressungen und Verschleiß führen könnte. Die Stabilisierungstaschen weisen je für sich nur einen wesentlich geringeren Grundrißquerschnitt als die Lagertasche selbst auf und verbrauchen somit nicht viel Druckflüssigkeit, sodaß die Drucksteuerung der Zylinderkammer, aus der die Stabilisierungstaschen ihre Druckflüssigkeit beziehen, nicht nennenswert beeinflußt wird.

Die Stütztasche nach Anspruch 5 soll eine mindestens teilweise hydraulische Entlastung der Dichtleiste ergeben.

Wenn die Wirkfläche der Dichtleiste gemäß Anspruch 6 mindestens so groß wie die Wirkfläche der zugeordneten Lagertasche ist, kann bei Füllung der Stütztasche mit Druckflüssigkeit unter dem gleichen Druck wie in der zugeordneten Lagertasche (Anspruch 7) die hydraulische Entlastung sogar vollkommen erzielt werden.

Dies kann konstruktiv auf einfache Weise in der in Anspruch 8 wiedergegebenen Weise herbeigeführt werden, wodurch die Druckflüssigkeit zur Versorgung der Lagertaschen gleichzeitig für die hydraulische Entlastung genutzt werden kann.

Wenn die hydraulische Entlastung vollkommen ist, d.h. die Dichtleiste auf der Druckflüssigkeit in den Stütztaschen "schwimmt", kann sich die Dichtleiste besonders vollkommen an den Verlauf des Innenumfangs der Hohlwalze anschmiegen.

Die Erfindung ist in erster Linie für Walzen mit Hohlwalzen vorgesehen, die relativ leicht verformbar sind. Sie sollen zwar im Betrieb ihre Rohrform behalten und nicht "flattern", aber doch so deformierbar sein, daß sie ein nicht konstantes Druckprofil der Stützelemente "durchlassen" und sich an eine Gegenwalze leicht anschmiegen können.

Das Material der Hohlwalze sollte unter diesem Aspekt gemäß Anspruch 9 einen E-Modul aufweisen, der höchstens die Hälfte des E-Moduls von Stahl beträgt.

Insbesondere kommt eine Bemessung nach Anspruch 10 in Betracht.

Bei dem bevorzugten Ausführungsbeispiel der Erfindung ist die "unter den Linienkräften im Walzspalt merklich verformbare Hohlwalze" aus einem faserverstärkten Kunststoff hergestellt (Anspruch 11).

Bei dem bevorzugten Ausführungsbeispiel der Erfindung (Anspruch 12) ist der E-Modul in Längsrichtung und Umfangsrichtung der Hohlwalze unterschiedlich, was in der in Anspruch 13 wiedergegebenen Weise verwirklicht werden kann.

Eine Walze mit einer Hohlwalze aus gummielastischem Material mit Verstärkungseinlagen geht aus der DE 25 22 657 A hervor. Hierbei sind aber die Einlagen nicht in der erfindungsgemäßen Weise dreilagig angeordnet, was hier den Zweck hat, jeglichen versteifenden Sandwich-Effekt im Hinblick auf eine Biegung in einer durch die Achse gehenden Ebene zu vermeiden.

Der Einfluß der Wickelrichtung auf den E-Modul bei Walzenrohren aus Kunstharz mit gewickelten Faserverstärkungen geht für sich genommen aus der Firmenschrift "Walzen in Leichtbauweise ... ein Produkt von Freudenberg" der Firma Carl Freudenberg in DE-69469 Weinheim hervor.

Faserverstärkte Kunststoffe bieten an ihrer Außenfläche häufig nicht immer optimale Gleitverhältnisse. Aus diesem Grund empfiehlt es sich, gemäß Anspruch 14 auf dem Innenumfang der Hohlwalze eine gleitgünstige Schicht vorzusehen, die gleichzeitig verhindert, daß die Hydraulikflüssigkeit unmittelbar gegen das Harzmaterial der Hohlwalze ansteht und damit unter Umständen auf die Dauer chemische Reaktionen eingeht.

An der Außenseite der Hohlwalze kann gemäß Anspruch 15 in an sich bekannter Weise ein Überzug aus einem elastomeren Material vorgesehen sein.

In der Zeichnung ist ein Ausführungsbeispiel der Erfindung dargestellt.
Fig. 1 zeigt eine schematische Ansicht einer erfindungsgemäßen Walze, teilweise im Schnitt;
Fig. 2 zeigt einen Querschnitt durch die Walze nach Fig. 1 nach der Linie II-II;
Fig. 3 zeigt eine vergrößerte Wiedergabe des oberen Teils von Fig. 2;
Fig. 4 zeigt eine Ansicht des oberen Teils der Walze nach Fig. 1, teilweise im Schnitt nach der Linie IV-IV in Fig. 3;
Fig. 5 zeigt eine Ansicht gemäß Fig. 4 von oben;
Fig. 6 zeigt eine Ansicht von oben der in Fig. 5 erkennbaren Dichtleiste für sich genommen;
Fig. 7 zeigt einen Querschnitt nach der Linie VII-VII in vergrößertem Maßstab;
Fig. 8 zeigt einen Schnitt nach der Linie VIII-VIII in Fig. 6;
Fig. 9a),b) und c) sowie 10a), b) und c) zeigen einen Vergleich der Druckverhältnisse an den Stoßstellen zwischen aufeinanderfolgenden Stützelementen bei einer Walze des Standes der Technik und bei einer erfindungsgemäßen Walze in vergrößertem Maßstab.

Wenn im folgenden von "oben" die Rede ist, so ist damit die in Wirkrichtung der Stützelemente voreilende Seite gemeint, die sich bei Druckgabe gegen den Innenumfang der Hohlwalze bewegt. Dies entspricht der in der Zeichnung wiedergegebenen Anordnung bei der die erfindungsgemäße Walze Unterwalze ist.

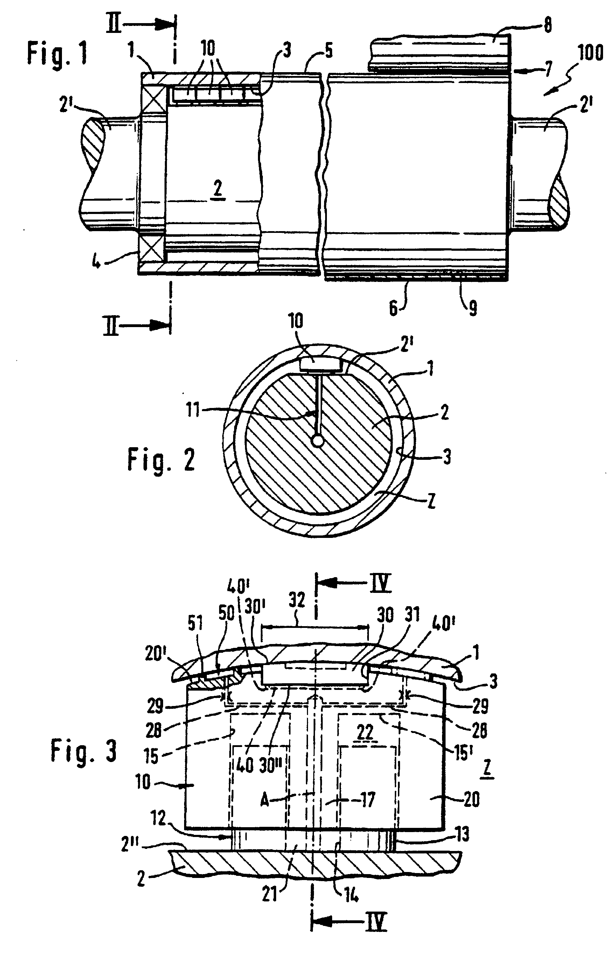

Die in Fig. 1 als Ganzes mit 100 bezeichnete Walze umfaßt eine Hohlwalze 1, die der Länge nach von einem undrehbaren Querhaupt 2 durchgriffen ist, welches ringsum Abstand vom Innenumfang 3 der Hohlwalze 1 beläßt und an den hervorstehenden Enden 2' in nicht dargestellter Weise in einem Walzenständer oder in den Schwingen eines Kalanders abgestützt ist. Die Hohlwalze 1 ist an ihren Enden auf Lagern 4 auf dem Querhaupt 2 drehbar gelagert. Ihr Außenumfang 5 bildet den arbeitenden Walzenumfang, der in einem in dem Ausführungsbeispiel oben gelegenen Walzspalt 7 mit einer nur angedeuteten Gegenwalze 8 zusammenwirkt, um eine nicht wiedergegebene Papierbahn oder dergleichen einer Glättungs- oder ähnlichen Behandlung zu unterziehen. Zu diesem Zweck kann die Hohlwalze 1 gegebenenfalls auch einen Bezug 9 aus elastomerem Material, zum Beispiel einem geeigneten Kunststoff, aufweisen, wie es in Fig. 1 rechts unten angedeutet ist, dessen Außenumfang 6 dann den arbeitenden Walzenumfang bildet.

Die Hohlwalze 1 selbst besteht aus einem faserverstärkten Kunststoffrohr, welches bei dem üblichen Walzendurchmesser von 40 bis 60 cm eine Wandstärke von 15 bis 20 mm aufweist und auf dem Innenumfang 3 eine glatte, gleitgünstige druckflüssigkeitsdichte Beschichtung aufweist.

In dem Zwischenraum Z zwischen dem Außenumfang des Querhaupts 2 und dem Innenumfang 3 der Hohlwalze 1 sind auf der dem Walzspalt 7 zugewandten Seite an dem Querhaupt 2 in Längsrichtung der Walze 100 dicht aufeinanderfolgende hydrostatische Stützelemente 10 angeordnet, die über ein in Fig. 2 als Ganzes mit 11 bezeichnete Zuleitungssystem im Innern des Querhaupts 2 mit Druckflüssigkeit versorgt werden und eine von diesem Druck abhängige Kraft nach oben gegen den Innenumfang 3 der Hohlwalze 1 in Richtung des Walzspalts 7 ausüben.

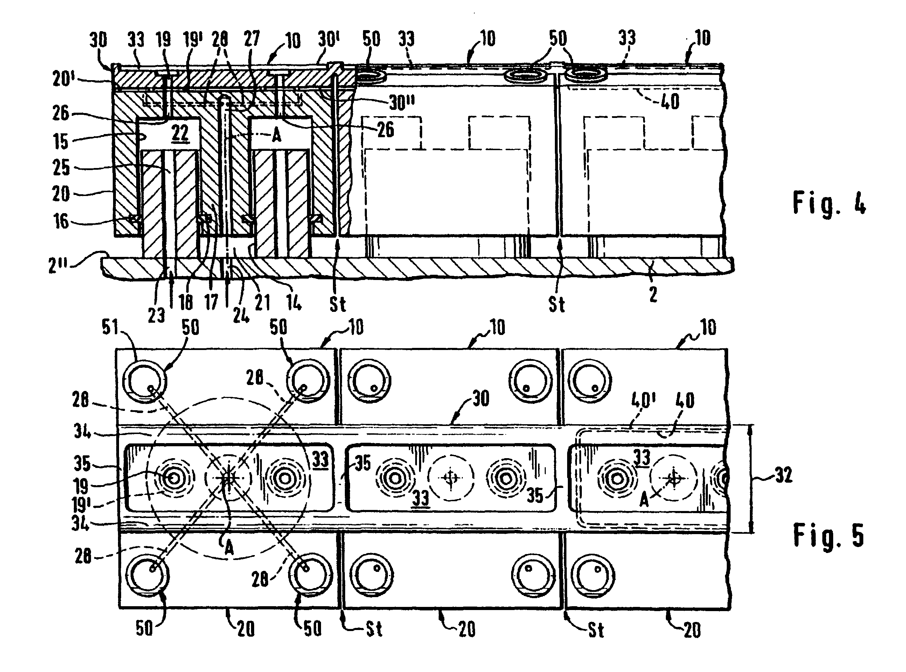

Die Ausbildung der Stützelemente 10 und des Zuleitungssystems 11 gehen im einzelnen aus den Fig. 3 bis 5 hervor. Jedes Stützelement 10 besteht aus einem Ringkolben 12 und einem Stützelementkörper 20. Die Ringkolben 12 besitzen eine zylindrische Außenumfangsfläche 13 und eine zu deren Achse A koaxiale zylindrische Innenumfangsfläche 14. Sie sind auf der abgeflachten Oberseite 2" des Querhauptes 2 mit zu dieser senkrechter Achse A in einer in Längsrichtung der Walze 100 verlaufenden Reihe angeordnet. Der Stützelementkörper 20 hat, wie Fig. 5 zeigt, in einer zu der Achse A senkrechten Ebene einen rechteckigen Grundriß, doch besitzt der Stützelementkörper 20 an seiner dem Querhaupt 2 zugewandten Unterseite eine Zylinderbohrung 15, die über Dichtungen 16 (Fig. 4) mit dem zylindrischen Außenumfang 13 des Ringkolbens 12 zusammenwirkt. Vom Boden 15' der Zylinderbohrung 15 erstreckt sich ein zu der Achse A koaxialer zylindrischer Ansatz 17 bis zum unteren Rand des Stützelementkörpers 20 nach unten, der über eine Dichtung 18 mit dem zylindrischen Innenumfang 14 des Ringkolbens 12 zusammenwirkt. Der Stützelementkörper 20 läßt sich also gegenüber dem Ringkolben 12 in Richtung der Achse A verlagern, wobei unterhalb des zylindrischen Ansatzes 17 eine Zylinderkammer 21 und oberhalb des Ringkolbens 12 eine zylindrische Ringkammer 22 gebildet sind.

Um ein möglichst präzise anpaßbares Linienkraftprofil im Walzspalt 7 zustandebringen zu können, ist die Ausdehnung der Stützelementkörper 20, denen bei der wiedergegebenen Konfiguration Zonen in Längsrichtung konstanter Kraftausübung entsprechen, begrenzt. Die Stützelementkörper 20 sind also generell nicht länger als 20 cm und können eine geringere Länge bis etwa 10 cm aufweisen, bei Walzenlängen in der Größenordnung von 4 bis 10 m. Diese Stützelementkörper 20 folgen so dicht wie möglich aufeinander und bilden also eine fein unterteilte Reihe von separat ansteuerbaren Kraftausübungsstellen.

In dem Querhaupt 2 sind zwei Arten von Zuleitungen für Druckflüssigkeit vorgesehen, die für jedes Stützelement 10 je eine Zuleitung 23 zur Versorgung der noch zu beschreibenden Lagertaschen und eine Zuleitung 24 umfaßt, die in die Zylinderkammer 21 mündet. Die Zuleitung 23 ist über einen nicht drosselnden Kanal 25 in dem Ringkolben 12 mit der Ringkammer 22 verbunden, von der in dem Ausführungsbeispiel zwei nicht drosselnde Kanäle 26, die in Längsrichtung der Walze 100 hintereinanderliegen, auf die Oberseite 20' des Stützelementkörpers 20 verlaufen. Die Zuleitungen 23 können an einen gemeinsamen Zuführkanal größeren Querschnitts im Querhaupt 2 angeschlossen sein. Die Gesamtheit dieser Leitungen bildet das in Fig. 2 vereinfacht dargestellte Zuleitungssystem 11.

Auch in dem zylindrischen Ansatz 17 ist ein Kanal 27 vorgesehen, der in die Zylinderkammer 21 mündet und am oberen Ende bis auf dort abgehende Zweigleitungen 28, in denen Drosselstellen 29 angeordnet sind (Fig. 3) geschlossen ist.

Die dem Innenumfang 3 der Hohlwalze 1 zugewandte Oberseite 20' des Stützelementkörpers 20 ist mit einem etwas geringeren Radius als ihn der Innenumfang 3 der Hohlwalze 1 aufweist, gewölbt, so daß sie einen gleichmässigen Abstand von wenigen Millimetern von dem Innenumfang 3 einhält.

In den vier Ecken des rechteckigen Grundrisses des Stützelementkörpers 20 sind kreisförmige Stabilisierungstaschen 50 vorgesehen, in die die Zweigleitungen 28 hineinführen und die von einem kreisförmigen Rand 51 umgeben sind, dessen Oberseite dem Innenumfang 3 der Hohlwalze 1 entsprechend geformt ist und dort dichtend anliegt.

Die Stützelementkörper 20 weisen ferner auf ihrer Oberseite miteinander in Längsrichtung der Walze 100 fluchtende Rechtecknuten 31 einer Breite 32 auf, die eine in dem Ausführungsbeispiel über sämtliche vorhandenen Stützelemente 10 einstückig durchgehende Dichtleiste 30 aufnehmen. In der dem Innenumfang 3 der Hohlwalze 1 zugewandten Oberseite 30' der Dichtleiste 30 ist oberhalb eines jeden Stützelements 10 eine Lagertasche 33 in Form einer flachen rechteckigen Vertiefung vorgesehen, die durch Längsränder 34 an den Längsrändern der Dichtleiste 30 und durch Querränder 35 begrenzt ist, die jeweils in Höhe der Stoßstellen St zwischen den Stützelementkörpern 20 aufeinanderfolgender Stützelemente 10 angeordnet sind. Die Oberseite der Ränder 34,35 ist entsprechend dem Innenumfang 3 der Hohlwalze 1 geformt, so daß die Ränder 34,35 am Innenumfang 3 der Hohlwalze 1 dichtend anliegen können. Die Dichtleiste 30 weist an jedem Stützelement 10 nicht drosselnde Lochungen 19 auf, die von der jeweiligen Lagertasche 33 auf die Unterseite 30" der Dichtleiste 30 durchgehen und mit den Kanälen 26 in der Oberseite 20' des jeweiligen Stützelementkörpers 20 fluchten. Der Übergangsbereich ist von einem ihn umgebenden O-Ring 19' abgedichtet, so daß die Druckflüssigkeit nicht zwischen der Oberseite 20' des Stützelements 20 und der Unterseite 30" der Dichtleiste 30 entweichen kann.

Die Stabilisierungstaschen 50 werden über die Zweigleitungen 28 mit der Drosselstelle 29 versorgt. Die dem Innern der Stabilisierungstaschen 50 zugeführte Druckflüssigkeit strömt über den Rand 51 nach außen ab. Bei einer Abstandsvergrößerung wird der Abströmquerschnitt erhöht und fällt wegen der Drosselstelle 29 der Druck ab. Die betreffende Stabilisierungstasche 50 nähert sich dann dem Innenumfang 3 der Hohlwalze 1 wieder an, wodurch der Abströmquerschnitt abfällt und der Druck steigt. Auf diese Weise stellt sich ein Gleichgewicht ein, wobei der Rand 51 selbsttätig in einem gewissen geringen Abstand von dem Innenumfang 3 der Hohlwalze 1 gehalten wird und durch einen tragenden Flüssigkeitsfilm von dem Innenumfang 3 getrennt bleibt.

Diese Funktion üben alle vier in Fig. 5 erkennbaren Stabilisierungstaschen 50 aus, so daß der Stützelementkörper 20, der an den Dichtungen 16,18 ein wenig taumelfähig gehalten ist und sich in seiner Lage gegenüberdem Innenumfang 3 der Hohlwalze 1 anpassen kann, stets in einer definierten Position gegenüber dem Innenumfang 3 gehalten wird.

Die Oberseiten der Ränder 51 bzw. 34,35 sind so gestaltet, daß sie alle auf einer gemeinsamen Zylinderfläche, die dem Innenumfang 3 der Hohlwalze 1 entspricht, gelegen sind. Die den Lagertaschen 33 zugeführte Druckflüssigkeit strömt über die in Längsrichtung verlaufenden Ränder 34 in Umfangsrichtung nach außen ab, weil ein Gefälle zwischen dem Druck in den Lagertaschen 33 und dem an der Außenkante eines jeden in Längsrichtung verlaufenden Randes 34 herrschenden Druck in dem Zwischenraum Z zwischen dem Innenumfang 3 der Hohlwalze 1 und dem Querhaupt 2 besteht.

In Fig. 3 und auf den jeweils rechten Seiten der Fig. 4 und 5 ist eine Abwandlung angedeutet, die in einer unter der jeweiligen Lagertasche 33 in dem Boden der Nut 31 an der Oberseite 20' des jeweiligen Stützelementkörpers 20 ausgearbeitete flache Stütztasche 40 von wenigen Millimetern Tiefe umfaßt. Die Stütztasche 40 hat in einer zu der Achse A senkrechten Ebene einen im wesentlichen rechteckigen Grundriß und eine Wirkfläche, die mindestens der Wirkfläche der zugeordneten Lagertasche 33 entspricht und eher ein wenig darüberliegt. Es sind also jeweils eine Lagertasche 33 und eine darunter angeordnete Stütztasche 40 übereinanderliegend einander zugeordnet. Bei dem Vorhandensein von Stütztaschen 40 entfallen die O-Ringe 19' an den Übergangsstellen der Kanäle 26 und der Lochungen 19, und es verläuft stattdessen eine geschlossene Dichtung 40' rundum die jeweilige Stütztasche 40. Es münden also die Kanäle 26 in die Stütztasche 40 und es gehen die Lochungen 19 ebenfalls von der Stütztasche 40 aus. Auf diese Weise füllt sich die Stütztasche 40 mit Druckflüssigkeit unter dem gleichen Druck wie die Lagertaschen 33. Bei entsprechender Bemessung der Wirkflächen "schwimmt" die Dichtleiste 30 auf der Druckflüssigkeit in der Stütztasche 40 und kann sich besonders leicht in ihrer Lage im Innenumfang 3 der Hohlwalze 1 anpassen. Die Dichtung 40' ist eine Schnurdichtung oder eine Lippendichtung, die bei den geringfügigen in Betracht kommenden Verlagerungen der Dichtleiste 30 gegenüber dem jeweiligen Stützelementkörper 20 dicht bleiben.

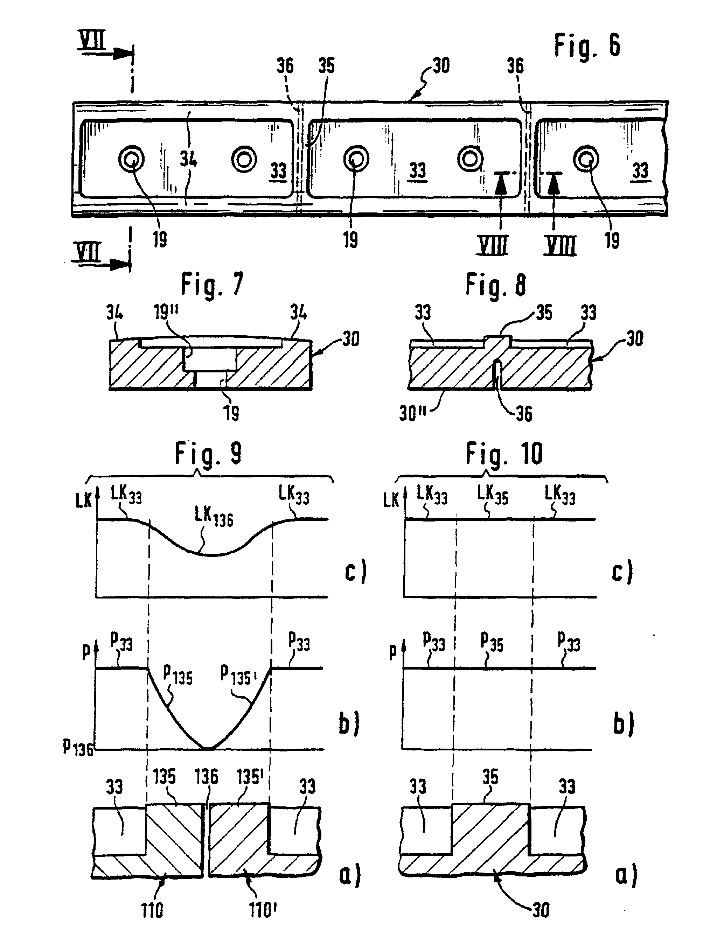

In Fig. 6 ist die Dichtleiste 30 noch einmal separat herausgezeichnet. Jede Lagertasche 33 weist am Boden die beiden Lochungen 19 auf, die mit einer stufenartigen Erweiterung 19" in die Lagertasche 33 ausmünden und mit den Kanälen 26 in dem Stützelementkörper 20 fluchten.

Ein wichtiger Punkt ist, daß jede Lagertasche 33 zwar zwei eigene in Längsrichtung verlaufende Ränder 34 aufweist, daß aber die Querränder 35 in Längsrichtung der Walze 100 aufeinanderfolgenden Lagertaschen 33,33 gemeinsam und durch einen einzigen geschlossenen Steg gebildet sind, wie es aus Fig. 8 zu erkennen ist.

Die Stützelementkörper 20 werden unter der Kraft der in der Zylinderkammer 21 anstehenden Druckflüssigkeit gegen den Innenumfang 3 der Hohlwalze 1 angepreßt, wobei die Stützelementkörper 20 nicht unmittelbar, sondern über die Dichtleiste 30 an dem Innenumfang 3 anliegen.

Damit die Dichtleiste 30 sich möglichst weitgehend an die Hohlwalze 1 von innen anschmiegen kann, ist ihr Biegewiderstand in Höhe der Stoßstellen St zwischen den einzelnen Stützelementen 10 durch eine von der Unterseite 30" der Dichtleiste 30 her eingebrachte Quernut 36 geschwächt, die sich bis etwa in die Hälfte der Dicke der Dichtleiste 30 erstreckt (Fig. 8). Oberhalb der Quernut 36 überbrückt jedoch der Querrand 35 die Stoßstelle St zwischen den einzelnen Stützelementen 10. In Fig. 5 sind die Quemuten 36 nicht wiedergegeben.

Die Bedeutung des gemeinsamen Querrandes 35 wird anhand der Fig. 9 und 10 erläutert. Fig. 9 stellt den Stand der Technik dar, bei welchem Stützelemente 110 und 110' in Längsrichtung der Walze aufeinanderfolgen. Die Stützelemente 110,110' weisen jeweils Lagertaschen 33 auf, die durch in Längsrichtung verlaufende Ränder und Querränder 135,135' begrenzt sind. Jede Lagertasche 33 hat also eigene Querränder 135 bzw. 135', die an der Stoßstelle St einander unmittelbar benachbart sind, aber zwischen sich einen Spalt 136 belassen, der mit dem Zwischenraum Z in Verbindung steht.

In Fig. 9b ist der Verlauf des Druckes in der Druckflüssigkeit dargestellt. Er weist im Bereich der Lagertaschen 33 den Wert P₃₃ auf, der in dem Ausführungsbeispiel in den beiden aufeinanderfolgenden Lagertaschen 33 gleich ist. Die Druckflüssigkeit strömt aus der jeweiligen Lagertasche 33 über die Querränder 135 bzw. 135' nach außen in den Spalt 136 ab. In dem Spalt 136 herrscht der Druck des Zwischenraums Z, d.h. der Druck Null oder jedenfalls ein niedrigerer Druck als in den Lagertaschen 33. Über die Querränder 135,135' fällt also der Druck in Längsrichtung der Walze entsprechend den Kurven P₁₃₅ und P₁₃₅, auf den Wert P₁₃₆ ab. Es ergibt sich also an der Stoßstelle St ein Druckabfall entsprechend Fig. 9b. Dieser Druckabfall am Innenumfang 3 der Hohlwalze 1 wird durch deren Formsteifigkeit zwar etwas gemildert, doch soll ja die Formsteifigkeit der Hohlwalze 1 begrenzt sein. Sie kann also den Druckabfall auf der Innenseite nicht vollständig abfangen, sondern es wird sich am Außenumfang 5 der Hohlwalze 1 ein Linienkraftverlauf mit einer schwächer ausgeprägten Senke einstellen, wie es durch die Kurve LK₁₃₆ in Fig. 9c wiedergegeben ist. Die Stoßstellen zwischen den einzelnen Stützelementen 10 sind dementsprechend an dem Ergebnis der Behandlung des durch den Walzspalt 7 hindurchgeleiteten Substrats in Streifenform erkennbar. Dies gilt natürlich nicht bei einer dickwandigen Hohlwalze aus Stahl, sondern nur bei relativ dünnwandigen Hohlwalzen 1 aus GFK oder Aluminium, die in einem gewissen Grad nachgiebig sind und die bei der Walze 100 vorhanden sein sollen.

In Fig. 10 ist die durch die Dichtleiste 30 abgewandelte Ausführungsform gemäß der Erfindung dargestellt. Die Dichtleiste 30 weist keine der Stoßstelle St der Fig. 9a entsprechende Stoßstelle auf, sondern überbrückt die Stoßstelle St zwischen den Stützelementkörpern 20. Es gibt also keinen dem Spalt 136 der Fig. 9a entsprechenden Abfluß für die an dem Querrand 35 in den Lagertaschen 33 anstehende Druckflüssigkeit. Da es keine Abströmung von Druckflüssigkeit in Längsrichtung der Walze 100 gibt, entsteht auch auf dem Querrand 35 kein Druckabfall, d.h. es bleibt die im Bereich der Lagertaschen 33 erzeugte Linienkraft LK₃₃ über die Stoßstelle St hinweg konstant: LK₃₃ = LK₃₅.

Dieses Ergebnis wird erreicht, indem die Dichtleiste 30 die Stoßstellen St zwischen den Stützelementkörpern 20 überbrückt, die im übrigen voneinander unabhängig und separat in Wirkrichtung verlagerbar sind. Dies ist für die separate Steuerbarkeit der einzelnen Stützelemente 10 unerläßlich. Bei der Erfindung wird also diese separate Steuerbarkeit und entsprechende Wählbarkeit einer Linienkraftverteilung mit der Vermeidung von Druckabfällen an den Stoßstellen St vereint.

## Patentansprüche

1. Walze (100) für die Druckbehandlung einer Bahn aus Papier, Textil, Kunststoffolie oder dergleichen,
mit einer umlaufenden, den arbeitenden Walzenumfang bildenden, unter den Linienkräften (LK) im Walzspalt (7) merklich verformbaren Hohlwalze (1),
mit einem die Hohlwalze (1) der Länge nach durchgreifenden, ringsum radialen Abstand zum Innenumfang (3) der Hohlwalze (1) belassenden, an den Enden (2') an äußeren Abstützungen abgestützten undrehbaren Querhaupt (2)
mit in mindestens einer Längsreihe an dem Querhaupt (2) auf der Seite des Walzspalts (7) angeordneten, mittels einer Druckflüssigkeit nach Art von Kolben/Zylindereinheiten mit zum Querhaupt (2) radialer Achse (A) gegen den Innenumfang (3) der Hohlwalze (1) preßbaren hydraulischen Stützelementen (10), welche in Längsrichtung des Querhaupts (2) dicht aneinander anschließen und zumindest in mehreren Gruppen über Zuleitungen (24) unabhängig voneinander ansteuerbar sind,
mit mindestens einer auf einer Längsreihe von Stützelementen (10,10,...) vorgesehenen, zumindest über mehrere in Längsrichtung des Querhaupts (2) aufeinanderfolgende Stützelemente (10) einstückig durchgehenden biegefähigen Dichtleiste (30),
gegen die die Stützelemente (10) von unten anliegen und die oben ihrerseits gegen den Innenumfang (3) der Hohlwalze (1) wirkt,
die auf der Oberseite (20') oberhalb eines jeden Stützelements (10) jeweils eine gegen den Innenumfang (3) der Hohlwalze (1) offene, ringsum berandete Lagertasche (33) aufweist, die zur Abstützung der Hohlwalze (1) mit Druckflüssigkeit füllbar ist und mit ihrem Rand (34,35) gegen den Innenumfang (3) der Hohlwalze (1) anliegt, wobei die Druckflüssigkeit ständig über den Rand (34,35) abströmt und dort einen tragfähigen Flüssigkeitsfilm bildet,
die von unten nach oben durchgehende, in die Lagertaschen (33) mündende Lochungen (19) aufweist, die mit Zuführungskanälen (25,26) für Druckflüssigkeit in den Stützelementen (10) in Verbindung stehen, und bei der die Berandungen an den einander benachbarten Seiten in Längsrichtung der Walze (100) aufeinanderfolgender Lagertaschen (33,33) durch einen beiden Lagertaschen (33,33) gemeinsamen Querrand (35) gebildet sind,
**dadurch gekennzeichnet, daß** die Kolben/Zylindereinheit (12,20) die Anpressung der Dichtleiste (30) an den Innenumfang (3) der Hohlwalze (1) unter dem Druck einer bis auf Zuleitung angeschlossenen Zylinderkammer (21) bewirkt,
daß die Zylinderkammern (21) der einzelnen Stützelemente (10) zumindest gruppenweise an separate Zuleitungen (24) mit unabhängig voneinander wählbarm Drücken angeschlossen sind,
daß in jedem Stützelement (10) die Zuführungskanäle (25,26) und Lochungen (19) für die Versorgung der zugeordneten Lagertasche (33) Drosselfrei und an eine separate zuleitung (23) angeschlossen sind,
und daß die Stützelemente (10) in Längsrichtung des Querhaupts (2) keine größere Länge als 20 cm aufweisen.

2. Walze nach Anspruch 1, **dadurch gekennzeichnet, daß** die Dichtleiste (30) in Höhe der Stoßstelle (St) am Übergang von einem Stützelement (10) auf das in Längsrichtung der Walze (100) benachbarte Stützelement (10) zur Erhöhung der Schmiegsamkeit der Dichtleiste (30) querschnittsgeschwächt ist.

3. Walze nach Anspruch 2, **dadurch gekennzeichnet, daß** die Querschnittsschwächung durch eine über die Breite und einen Teil der Höhe durchgehende Nut an der Unterseite (30") der Dichtleiste (30) gebildet ist.

4. Walze nach einem der Ansprüche 1 bis 3, **dadurch gekennzeichnet, daß** die Stützelemente (10) Stützelementkörper (20) umfassen, die.in der zu ihrer Wirkrichtung senkrechten Ebene einen rechtekkigen Grundriß aufweisen und die Lagertaschen (33) in Umfangsrichtung schmäler als die Stützelementkörper (20) sind und außerhalb des Grundrisses der jeweiligen Lagertasche (33) auf dem Stützelementkörper (20) nahe den Ecken seines rechteckigen Grundrisses vier ringsrum berandete Stabilisierungstaschen (50) vorgesehen sind, die über gedrosselte Zuleitungen (28) mit der an eine Zuleitung (24) in dem Querhaupt (2) angeschlossenen Zylinderkammer (21) verbunden sind.

5. Walze nach einem der Ansprüche 1 bis 4, **dadurch gekennzeichnet, daß** bei mindestens einem Stützelement (10) in dem Bereich der Oberseite (20') des Stützelementkörpers (20), der zur Abstützung der Dichtleiste (30) dient, eine ringsum gegen die Unterseite (30") der Dichtleiste (30) abgedichtete flache, mit Druckflüssigkeit füllbare Stütztasche (40) vorgesehen ist.

6. Walze nach Anspruch 5, **dadurch gekennzeichnet, daß** die Stütztasche (40) mindestens die gleiche Wirkfläche wie die zugeordnete Lagertasche (33) des gleichen Stützelements (10) hat.

7. Walze nach Anspruch 5 oder 6, **dadurch gekennzeichnet, daß** die Stütztasche (40) mit Druckflüssigkeit unter dem gleichen Druck füllbar ist wie die zugeordnete Lagertasche (33) des gleichen Stützelements (10).

8. Walze nach Anspruch 7, **dadurch gekennzeichnet, daß** die Kanäle (26) zur Versorgung der Lagertaschen (33) in die Stütztasche (40) münden und die zu den Lagertaschen (33) führenden Lochungen (19) der Dichtleiste (30) von der Stütztasche (40) ausgehen.

9. Walze nach einem der Ansprüche 1 bis 8, **dadurch gekennzeichnet, daß** die Hohlwalze (1) aus einem Material besteht, dessen E-Modul höchstens die Hälfte des E-Moduls von Stahl beträgt.

10. Walze nach Anspruch 9, **dadurch gekennzeichnet, daß** die Hohlwalze (1) eine radiale Wandstärke von weniger als 20 mm besitzt und der E-Modul des Materials der Hohlwalze (1) in Längsrichtung derselben weniger als 100 000 N/mm² beträgt.

11. Walze nach Anspruch 9 oder 10, **dadurch gekennzeichnet, daß** die Hohlwalze (1) aus einem faserverstärktem Kunststoff besteht.

12. Walze nach einem der Ansprüche 1 bis 11, **dadurch gekennzeichnet, daß** der E-Modul des Materials der Hohlwalze (1) in deren Längsrichtung kleiner als in deren Umfangsrichtung ist.

13. Walze nach Anspruch 11 und 12, **dadurch gekennzeichnet, daß** die Faserverstärkung aus gewickelten Endlosfaser oder Endlosfaseraggregaten besteht und dreilagig ausgeführt ist, wobei die Fasern der radial äußeren Lagen einen Wickelwinkel von +/- 15° zur Umfangsrichtung und die Fasern der mittleren Lage einen Wickelwinkel von +/- 15° zur Längsrichtung aufweisen.

14. Walze nach einem der Ansprüche 10 bis 13, **dadurch gekennzeichnet, daß** die Hohlwalze (1) auf ihrem Innenumfang (3) eine gleitgünstige und gegen die Hydraulikflüssigkeit dichte Schicht aufweist.

15. Walze nach einem der Ansprüche 10 bis 14, **dadurch gekennzeichnet, daß** die Hohlwalze (1) auf dem Außenumfang (5) einen Überzug (9) aus einem elastomeren Material trägt.

## Claims

1. A roller (100) for the pressure treatment of a web of paper, textile, plastic film or the like,
comprising a rotating shell (1) forming the working roller periphery and perceptibly deformable under the linear forces (LK) in the nip (7),
with a non-rotatable beam (2) which extends throughout the length of the shell (1) with a radial distance left clear all round from the inner periphery (3) of the shell (1), said beam (2) being supported on external supports at the ends (2'),
with hydraulic support elements (10) which are disposed in at least one longitudinal row on the beam (2) on the side of the nip (7) and which are pressable with an axis (A) radial to the beam against the inner periphery (3) of the shell (1) by means of a pressure fluid after the style of piston/cylinder units, said support elements (10) sealingly adjoining one another in the longitudinal direction of the beam (2) and being controllable via supply lines (24) at least in a number of groups independently of one another,
with at least one bendable sealing strip (30) which is provided on one longitudinal row of support elements (10, 10, ...) and which extends in one piece at least over a plurality of support elements (10) consecutive in the longitudinal direction of the beam (2),
against which sealing strip or strips the support elements (10) bear from below and which at the top in turn act against the inner periphery (3) of the shell (1),
which has on the top (20') above each support element (10) in each case a bearing pocket (3) which is open to the inner periphery (3) of the shell (1) and which is bordered all round and which for the purpose of supporting the shell (1) is fillable with pressure fluid and which bears by its edge (34, 35) against the inner periphery of the shell (1), the pressure fluid continuously flowing off over the edge (34, 35) where it forms a load-bearing fluid film,
which has perforations (19) extending continuously from the bottom to the top and leading into the bearing pockets (33), which perforations communicate with supply ducts (25, 26) for pressure fluid in the support elements (10),
and wherein the borders at the adjacent sides of bearing pockets (33, 33) consecutive in the longitudinal direction of the roller (1) are formed by a transverse edge (35) common to both bearing pockets (33, 33),
**characterised in that**
the piston/cylinder unit (12, 20) causes the sealing strip (30) to be pressed against the inner periphery (3) of the shell (1) under the pressure of a cylinder chamber (21) closed except for supply lines,
**in that** the cylinder chambers (21) of the individual support elements (10) are connected at least in groups to separate supply lines (24) with pressures which can be selected independently of one another,
**in that** in each support element (10) the supply ducts (25, 26) and perforations (19) for the supply of the associated bearing pocket (33) are connected unthrottled and to a separate supply line (23),
and **in that** the support elements (10) in the longitudinal direction of the beam (2) are no longer than 20 cm.

2. A roller according to claim 1, **characterised in that** the sealing strip (30) is weakened in its cross-section at the level of the junction (St) at the transition from one support element (10) to the adjacent support element (10) in the longitudinal direction of the roller (100), for the purpose of increasing the flexibility of the sealing strip (30).

3. A roller according to claim 2, **characterised in that** the cross-sectional weakening is formed by a groove on the underside (30'') of the sealing strip (30), said groove being continuous over the width and some of the height.

4. A roller according to any one of claims 1 to 3, **characterised in that** the support elements (10) comprise support element members (20) which have a rectangular cross-section in the plane perpendicular to their direction of action and the bearing pockets (33) are narrower in the peripheral direction than the support element members (20) and outside the cross-section of the respective bearing pocket (33) on the support element member (20) there are provided near the corners of its rectangular cross-section four stabilisation pockets (50) which are bordered all round and which are connected via throttled supply lines (28) to the cylinder chamber (21) connected to a supply line (24) in the beam (2).

5. A roller according to any one of claims 1 to 4, **characterised in that** a flat support pocket (40) fillable with pressure fluid and sealed off all round from the underside (30'') of the sealing strip (30) is provided at least at one support element (10) in the region of the top (20') of the support element member (20) serving to support the sealing strip (30).

6. A roller according to claim 5, **characterised in that** the support pocket (40) has at least the same operative area as the associated bearing pocket (33) of the same support element (10).

7. A roller according to claim 5 or 6, **characterised in that** the support pocket (40) is fillable with pressure fluid under the same pressure as the associated bearing pocket (33) of the same support element (10).

8. A roller according to claim 7, **characterised in that** the ducts (26) for supplying the bearing pockets (33) lead into the support pocket (40) and the perforations (19) in the sealing strip (30) leading to the bearing pockets (33) radiate from the support pocket (40).

9. A roller according to any one of claims 1 to 8, **characterised in that** the shell (1) consists of a material whose E-modulus is no greater than half the E-modulus of steel.

10. A roller according to claim 9, **characterised in that** the shell (1) has a radial wall thickness of less than 20 mm and the E-modulus of the material of the shell (1) in the longitudinal direction thereof is less than 100,000 N/mm².

11. A roller according to claim 9 or 10, **characterised in that** the shell (1) consists of a fibre-reinforced plastic.

12. A roller according to any one of claims 1 to 11, **characterised in that** the E-modulus of the material of the shell (1) in its longitudinal direction is smaller than in its peripheral direction.

13. A roller according to claim 11 and 12, **characterised in that** the fibre reinforcement consists of wound endless fibres or endless fibre aggregates and is made in three layers, the fibres of the radially outer layers having a winding angle of +/- 15° to the peripheral direction and the fibres of the middle layer having a winding angle of +/- 15° to the longitudinal direction.

14. A roller according to any one of claims 10 to 13, **characterised in that** the shell (1) has on its inner periphery (3) a coating which promotes sliding and which is sealing-tight to the hydraulic fluid.

15. A roller according to any one of claims 10 to 14, **characterised in that** the shell (1) has on the outer periphery (5) a covering (9) of an elastomeric mater ial.

## Revendications

1. Rouleau (100) pour le traitement par compression d'une bande de papier, de textile, d'une feuille de matière plastique ou objet analogue dans lequel :
- un cylindre creux (1) enveloppant, nettement déformable sous l'action de forces linaires (LK) dans la fente de laminage (7) forme la périphérie active du rouleau,
- une traverse (2) bloquée en rotation s'appuie à ses extrémités (2') sur des appuis extérieurs laissant un espace radial circulaire traversant le cylindre creux (1) sur sa longueur par rapport à la périphérie interne (3) de ce cylindre,
- sur au moins une rangée longitudinale du côté situé vers la fente de laminage (7) de la traverse (2), des éléments de soutien (10) hydrauliques constitués par des ensembles du genre piston/cylindre ayant un axe (A) radial par rapport à la traverse (2) et qu'un fluide sous pression peut appliquer sur la périphérie interne (3) du cylindre creux (1), sont serrés les uns contre les autres et peuvent être commandés en plusieurs groupes par des canalisations (24) indépendamment les uns des autres,
- au moins une baguette d'étanchéité (30) flexible et en une seule pièce est sur une rangée longitudinale d'éléments de soutien (10, 10), prévue sur au moins plusieurs de ces éléments (10) qui se succèdent selon la direction longitudinale de la traverse (2) en soutenant par-dessous la baguette qui de son côté, agit par sa partie supérieure sur la périphérie interne (3) du cylindre creux (1),
- la baguette (30) comprend sur sa face supérieure (20') au-dessus de chaque élément de soutien (10), une poche de palier (33) bordée périphériquement et ouverte vers la périphérie interne (3) du cylindre creux (1), cette poche (33) pouvant être remplie de liquide sous pression en étant appliquée par son bord (34, 35) sur la périphérie interne (3) du cylindre creux (1) avec écoulement permanent pardessus le bord (34, 35) du liquide sous pression qui forme ainsi un film liquide porteur,
- dans les poches de palier (33) débouchent de bas en haut des perçages (19) qui sont reliés à des canaux d'amenée (25, 26) de liquide sous pression prévus dans les éléments de soutien (10), et
- les bords des poches de palier (33, 33) se suivant les unes les autres par leurs côtés voisins en direction longitudinale du rouleau (100) sont formés par un bord transversal (35) commun aux deux poches de palier (33, 33),
**caractérisé en ce que**
- l'ensemble du genre cylindre/piston (12, 20) applique la baguette d'étanchéité (30) sur la périphérie interne (3) du cylindre creux (1), sous la pression exercée par un groupe cylindre/piston (21) fermé à l'exception de conduites d'amenée,
- les chambres (21) des cylindres des différents éléments de soutien (10) sont raccordés au moins par groupes, à des canalisations séparées (24) avec des pressions qui peuvent être choisies à volonté indépendamment les unes des autres,
- dans chaque élément de soutien (10), les canaux d'amenée (25, 26) et des perçages (19) sont raccordés sans étranglement à une conduite séparée d'amenée (23), pour alimenter la poche de palier (33) associée, et
- les éléments de soutien (10) présentent selon la direction longitudinale de la traverse (2), une dimension ne dépassant pas 20 cm.

2. Rouleau selon la revendication 1,
**caractérisé en ce que**
la baguette d'étanchéité (30), au niveau du point de poussée (St) constituant le passage d'un élément de soutien (10) à l'élément de soutien (10) voisin dans la direction longitudinale du rouleau (100), a sa section affaiblie afin d'accroître sa souplesse.

3. Rouleau selon la revendication 2,
**caractérisé en ce que**
l'affaiblissement de la section est apporté dans la face inférieure (30") de la baguette d'étanchéité (30), par une rainure continue occupant la largeur et une partie de la hauteur de cette baguette.

4. Rouleau selon l'une des revendications 1 à 3,
**caractérisé en ce que**
- les éléments de soutien (10) comportent chacun un corps (20) qui, projeté sur un plan perpendiculaire à sa direction d'action, a une forme rectangulaire,
- les poches de palier (33) sont, en direction périphérique, plus étroites que les corps (20) des éléments de soutien, et
- sur chaque corps d'élément de soutien (20), en dehors de sa poche de palier (33) et près des angles de sa forme rectangulaire, quatre poches (50) de stabilisation bordées périphériquement sont reliées par des conduites (28) à étranglement à la chambre de cylindre (21) raccordée à une canalisation (24) située dans la traverse (2).

5. Rouleau selon l'une des revendications 1 à 4,
**caractérisé en ce que**
dans au moins un élément de soutien (10) et dans la face supérieure (20') du corps (20) de cet élément servant de soutien à la baguette d'étanchéité (30), est prévue une poche de soutien (40), plate, étanche périphériquement le long de la face inférieure (30'') de la baguette (30) et qui peut être remplie de liquide sous pression.

6. Rouleau selon la revendication 5,
**caractérisé en ce que**
la poche de soutien (40) a une surface active au moins égale à celle de la poche de palier (33) associée du même élément de soutien (10).

7. Rouleau selon les revendications 5 ou 6,
**caractérisé en ce que**
la poche de soutien (40) peut être remplie de liquide ayant la même pression que celle du liquide sous pression remplissant la poche de palier (33) associée du même élément de soutien (10).

8. Rouleau selon la revendication 7,
**caractérisé en ce que**
les canaux (26) alimentant les poches de palier (33) débouchent dans la poche de soutien (40) et les perçages (19) de la baguette d'étanchéité (30) conduisant aux poches de palier (33), partent de la poche de soutien (40).

9. Rouleau selon l'une des revendications 1 à 8,
**caractérisé en ce que**
le cylindre creux (1) est fait d'un matériau dont le module d'élasticité est égal au plus à la moitié du module d'élasticité de l'acier.

10. Rouleau selon la revendication 9,
**caractérisé en ce que**
le cylindre creux (1) a une paroi dont l'épaisseur radiale est inférieure à 20 mm et le module d'élasticité du matériau qui le compose est selon sa direction longitudinale, inférieur à 100 000 N/mm².

11. Rouleau selon les revendications 9 ou 10,
**caractérisé en ce que**
le cylindre creux (1) est en matière plastique renforcée par des fibres de verre.

12. Rouleau selon l'une des revendications 1 à 11,
**caractérisé en ce que**
le module d'élasticité du matériau composant le cylindre creux (1) est, selon la direction longitudinale de celui-ci, inférieur à ce qu'il est selon la direction périphérique.

13. Rouleau selon les revendications 11 ou 12,
**caractérisé en ce que**
les fibres de verre assurant le renforcement sont des fibres continues enroulées ou rassemblées en vrac, disposées en trois couches, les fibres des couches externes présentant, par rapport à la direction périphérique, un angle d'enroulement de ± 15 degrés tandis que les fibres de la couche médiane présentent un angle d'enroulement de ± 15 degrés par rapport à la direction longitudinale.

14. Rouleau selon l'une des revendications 10 à 13,
**caractérisé en ce que**
le cylindre creux (1) porte, sur sa périphérie interne (3), une couche favorisant le glissement et étanche au liquide utilisé comme liquide de pression.

15. Rouleau selon l'une des revendications 10 à 14,
**caractérisé en ce que**
le cylindre creux (1) porte sur sa périphérie externe (5) un revêtement (9) fait d'un matériau élastomère.
